(19) Europäisches Patentamt
European Patent Office
Office européen des brevets

(11) Veröffentlichungsnummer: **0 464 483 B1**

(12) # EUROPÄISCHE PATENTSCHRIFT

(45) Veröffentlichungstag der Patentschrift: **08.02.95**

(51) Int. Cl.$^6$: **C08G 18/78**, C08G 18/50, C09J 175/04, C08G 18/12, C08G 18/30, B32B 7/12

(21) Anmeldenummer: **91110130.1**

(22) Anmeldetag: **20.06.91**

(54) **Verwendung von Klebstoffen auf Basis von Polyolen und Polyisocyanaten.**

(30) Priorität: **03.07.90 DE 4021113**

(43) Veröffentlichungstag der Anmeldung:
**08.01.92 Patentblatt 92/02**

(45) Bekanntmachung des Hinweises auf die Patenterteilung:
**08.02.95 Patentblatt 95/06**

(84) Benannte Vertragsstaaten:
**AT BE DE DK FR GB IT NL SE**

(56) Entgegenhaltungen:
**EP-A- 0 131 523**
**EP-A- 0 132 198**
**EP-A- 0 454 066**
**FR-A- 1 358 183**
**US-A- 3 657 057**

(73) Patentinhaber: **BAYER AG**

**D-51368 Leverkusen (DE)**

(72) Erfinder: **Meckel, Walter, Dr.**
**Zonser Strasse 9**
**W-4040 Neuss (DE)**
Erfinder: **Hänsel, Eduard, Dr.**
**Espenstrasse 2**
**W-5600 Wuppertal (DE)**
Erfinder: **Ganster, Otto, Dr.**
**Droste-Hülshoff-Strasse 5**
**W-5068 Odenthal (DE)**
Erfinder: **Arend, Günter, Dr.**
**Claudiusstrasse 42**
**W-4047 Dormagen (DE)**
Erfinder: **Büchner, Jörg**
**Seelsheide 17**
**W-5060 Bergisch Gladbach 2 (DE)**

**EP 0 464 483 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von transparenten Isocyanatgruppen enthaltende Klebstoffen zur Herstellung von Verbundfolien.

Die Herstellung von Verbundfolien für die Verpackungsindustrie nimmt einen immer stärkeren Umfang an, da durch die Kombination von verschiedenen Folien eine Verbundfolie mit Eigenschaften nach Maß aufgebaut werden kann. Polyurethane sind die Klebstoffe der Wahl, da sie eine gute Verbundhaftung der Folien untereinander gewährleisten, geruchsfrei sind und wegen ihrer Transparenz keine optische Beeinträchtigung der zu verpackenden Güter bewirken. Während in der Vergangenheit die Masse der Klebstoffe aus Lösung appliziert wurde, geht der Trend heute über lösungsmittelarme (vgl. DE-A-34 31 688) zu lösungsmittelfreien Systemen (vgl. z.B. DE-A 2 549 227 und 38 15 242). Schwachpunkte dieser neuen Systeme sind insbesondere die relativ geringe Anfangshaftung, die vor allem bei der zügigen Weiterverarbeitung eines Verbundes zu Schwierigkeiten führen kann. Zudem zeigen Verbunde, bei denen Aluminium eines der zu verbindenden Folienmaterialien darstellt, geringe Festigkeiten, insbesondere, wenn diese anschließend noch einer Dampfsterilisation unterworfen werden.

Es wurden bereits viele Möglichkeiten zur Verbesserung der Verbundhaftung von Aluminiumverbunden vorgeschlagen (z.B. EP-A-349 838, DE-A-2 857 281 und 3 529 176), die sich alle dadurch auszeichnen, daß Additive wie beispielsweise Silane, Epoxide, Phosphorsäure und/oder Säureanhydride zugegeben werden.

Harnstoffgruppen enthaltende Polyurethane für Klebstoffanwendungen sind nicht neu, waren aber bislang nur in Lösung durch Umsetzen eines Isocyanatprepolymeren mit einem Überschuß eines Polyamins (US-A-3 931 116) oder Bisketimins (US-A-4 137 276) herzustellen.

Wegen der Instabilität von Esterbindungen in Gegenwart von Aminogruppen sind nach dieser Verfahrensweise lagerstabile Produkte nur auf Polyetherbasis möglich. Wegen der hohen Reaktivität der Aminogruppen enthaltenden Produkte ist eine weitere Umsetzung nur mit Polyepoxiden und nicht mit Polyisocyanaten möglich.

Unter Feuchtigkeitsausschluß stabile Polyurethanharnstofflösungen sind durch Umsetzung eines Polyisocyanatprepolymeren mit Aminosilanen unter Ausbildung von Trialkoxysilanendgruppen möglich (DE-A-2 155 258), die unter Wassereinfluß rasch vernetzen.

Gerade diese Wasserempfindlichkeit steht neben den hohen für Stabilisierung notwendigen Lösungsmittelanteilen einem Praxiseinsatz entgegen.

Die DE-A 38 15 237 betrifft ein Verfahren zur Herstellung von monomerenarmen Polyisocyanaten durch selektive Reduzierung des Gehalts der modifizierten Polyisocyanate durch Zugabe von Wasser, wobei die erhaltenen Produkte für die Beschichtungstechnologie zum Einsatz kommen.

Wegen der an sich schon niedrigen Monomergehalte der Polyisocyanate resultieren aus der Reaktion mit Wasser Polyisocyanatharnstoffprodukte mit einem sehr geringem Gehalt an Harnstoffsegmenten, von dem noch keine adhäsionsfördernde Wirkung zu erwarten ist.

In EP 0 454 066 werden Gießmassen auf Polyurethanbasis zur Herstellung von Verbundglasscheiben beschrieben und beansprucht, die durch Umsetzung einer Kombination spezieller Polyole (Polyesterpolyole und Polyetherpolyole) mit speziellen Diisocyanaten hergestellt werden, wobei eines der umgesetzten Diisocyanate Harnstoffgruppierungen enthält. Nach der Lehre der genannten Europäischen Patentanmeldung werden relativ dicke Scheiben mit einer 1 bis 3 mm dicken Polyurethanschicht als Gießmasse verbunden, wobei relativ hohe Mengen an Polyurethan als Gießmasse auf die zu verklebenden Scheiben aufgetragen werden müssen. Die Europäischen Patentanmeldungen 132 198 und 131 523 haben Sicherheitsscheiben zum Gegenstand, die durch relativ große Mengen an Polyurethan verbunden werden müssen. In der US-Patentschrift 3 657 057 wird die Lehre vermittelt, daß man eine Glas- oder Polycarbonatscheibe mit einer Polyurethanscheibe verkleben kann durch Aufbringen eines polymerisierbaren Polyurethanharzes zwischen den genannten Scheiben. In dem genannten US-Patent wird nicht die Lehre vermittelt, daß es für die Verklebung von Folien besonders vorteilhaft ist, wenn der Klebstoff eine bestimmte Menge an speziellen Harnstoffgruppierungen enthält. Gemäß der genannten US-Patentschrift werden Polyisocyanate verwendet, die üblicherweise keine Harnstoffgruppierungen aufweisen, wie die dortigen Beispiele zeigen.

Aufgabe der vorliegenden Erfindung war es, Klebstoffe für Verbundfolien mit verbesserter Festigkeit, insbesondere Anfangsfestigkeit zur Verfügung zu stellen.

Gegenstand der Erfindung ist die Verwendung von transparenten, Isocyanatgruppen enthaltenden Klebstoffen auf Basis wenigstens eines Polyols und wenigstens eines Isocyanates zur Herstellung von Verbundfolien, dadurch gekennzeichnet, daß der Klebstoff Harnstoffgruppierungen der Formel

X-R-NH-CO-NH-R'-Y

aufweist, wobei

X, Y gleich oder verschieden sind und für eine Isocyanat- und/oder Urethangruppe stehen,

R, R' gleich oder verschieden sind und Reste eines wenigstens zwei NCO-Gruppen unterschiedlicher Reaktivität aufweisenden Isocyanates nach Entfernen der zwei NCO-Gruppen darstellen und wobei der Klebstoff 0,15 bis 4 Gew.-% -NH-CO-NH-Gruppen, bezogen auf den Klebstoff, enthält und darüber hinaus der Klebstoff in einer Menge von 0,8 bis 20 $g/m^2$ auf die zu verklebenden Folien aufgetragen wird.

Unter einem Isocyanat mit zwei NCO-Gruppen unterschiedlicher Reaktivität wird im vorliegenden Fall insbesondere ein unsymmetrisch substituiertes Diisocyanat verstanden, insbesondere Diisocyanate, bei denen eine Isocyanatgruppe durch elektronische und/oder insbesondere sterische Effekte gegenüber der anderen eine verminderte Reaktivität aufweist.

Bevorzugte Polyole sind Hydroxylgruppen enthaltende Polyester, Polyether und Polyetherester. In einer bevorzugten Ausführungsform enthält der zu verwendende Klebstoff 0,3 bis 3 Gew.-% -NH-CO-NH-Gruppen bezogen auf den Klebstoff. Bevorzugte Gruppen R und R' sind Aryl-, Alkyl-, Cycloalkyl- und Aralkylreste, die gegebenenfalls substituiert sein können, insbesondere mit Alkylgruppen wie beispielsweise Methylgruppen.

In einer besonders bevorzugten Ausführungsform haben R und R' die gleiche Bedeutung und stellen Strukturelemente der Formel

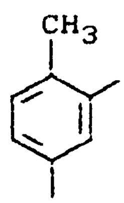

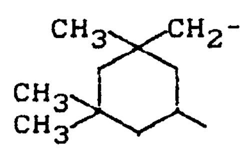

dar.

Bei den zu verwendenden Klebstoffen handelt es sich vorzugsweise um Einkomponentenklebstoffe auf Basis von Isocyanatgruppen enthaltenen Prepolymeren mit einem Gehalt von Isocyanatgruppen von 1 bis 6, vorzugsweise 1,5 bis 3,5 Gew.-%, oder um Zweikomponentenklebstoffe auf Basis von Hydroxylgruppen enthaltenden Polyolen mit einer Hydroxylzahl von 30 bis 300, vorzugsweise 50 bis 150 und Isocyanatgruppen enthaltenden Prepolymeren mit einem Gehalt an Isocyanatgruppen von 3 bis 25, vorzugsweise 3,5 bis 18 Gew.-% in einer solchen Mischung, daß das Verhältnis der Isocyanatgruppen des Isocyanatgruppen enthaltenden Prepolymeren zu den Hydroxylgruppen der Polyolkomponente zwischen 1,05 zu 1 und 3,0 zu 1, vorzugsweise 1,1 zu 1 und 2,0 zu 1 liegt.

Erfindungsgemäß hat mindestens eine der Komponenten einen solchen Gehalt an Harnstoffgruppen, daß die Mischung einen Harnstoffgruppengehalt von 0,15 bis 4,0, bevorzugt 0,3 bis 3,0 Gew.-% aufweist.

Die Herstellung der Harnstoffgruppen enthaltenden Polyole oder Polyisocyanate erfolgt derart, daß Polyisocyanate mit unterschiedlich reaktiven Isocyanatgruppen vorzugsweise in Anwesenheit von vorzugsweise bifunktionellen Polyolen mit Wasser in einer solchen Menge umgesetzt werden, daß vorzugsweise nur die reaktiveren Isocyanatgruppen unter Harnstoffbildung abreagieren, so daß die jeweils weniger reaktiven für weitere Umsetzung zur Verfügung stehen,

Die Umsetzung mit Wasser erfolgt bei Temperaturen von 10-120 °C, vorzugsweise 50-100 °C und ganz besonders bevorzugt bei 80-95 °C.

Die so entstehenden Isocyanatgruppen enthaltenden Prepolymeren mit einem Isocyanatgruppengehalt von 1 bis 25 Gew,-% können als solche oder nach Mischung mit beliebigen Polyisocyanaten und/oder Polyisocyanataddukten und/oder Reaktion mit einem Unterschuß von vorzugsweise bifunktionellen Hydroxylverbindungen als Harnstoffgruppen enthaltende Polyisocyanate eingesetzt werden, oder werden mit einem Überschuß von vorzugsweise bifunktionellen Hydroxylverbindungen zu Harnstoffgruppen enthaltenden Polyolen umgesetzt, die als solche oder nach Abmischung mit beliebigen Polyolen eingesetzt werden können.

Selbstverständlich können solche Harnstoffgruppen enthaltenden Polyole mit einem Überschuß von Polyisocyanaten zu Harnstoffgruppen enthaltenden Polyisocyanaten umgesetzt werden.

Eine andere Möglichkeit zur Einführung von Harnstoffgruppen besteht in der Mitverwendung von längerkettigen Aminopolyethern und/oder Aminopolyestern wie sie z.B. nach DE-A-29 48 419 oder 34 03 498 erhalten werden. Das Molekulargewicht der vorzugsweise bifunktionellen Aminoverbindungen sollte im Bereich von 800 bis 3500, vorzugsweise 1000 bis 2500 liegen.

Um die für eine optimale Verbundhaftung notwendige mittlere Funktionalität von ca. 2,05 bis 2,7 einzustellen, bieten sich insbesondere Polyisocyanate mit einer oberhalb von zwei liegenden Funktionalität als Abmischkomponente für die Harnstoffgruppen enthaltenden Polyisocyanate und höherfunktionelle Polyole als Abmischkomponente für die Harnstoffgruppen enthaltenden Polyole an.

Besonders bevorzugte Ausführungsformen zur Herstellung der Harnstoffgruppen enthaltenden Polyole und Isocyanatgruppen enthaltenden Prepolymere sind die folgenden.

Herstellung von Harnstoffgruppen enthaltenden Polyolen

Das unsymmetrisch substituierte, vorzugsweise bifunktionelle Polyisocyanat wird in Gegenwart von vorzugsweise bifunktionellen Polyolen in einer Menge von 0,02 bis 0,5 Mol pro Mol Polyisocyanat bei Temperaturen von 10 bis 120, vorzugsweise 50 bis 100 °C, ganz besonders bevorzugt 80-95 °C, mit 0,1 bis 0,7, vorzugsweise 0,2 bis 0,5 Mol Wasser pro Mol Polyisocyanat umgesetzt. Der Fortgang der Reaktion kann zum Beispiel titrimetrisch über den Gehalt an Isocyanatgruppen oder volumetrisch über die entwickelte Kohlendioxidmenge verfolgt werden. Nach Erreichen des gewünschten Umsatzes wird ein Überschuß eines vorzugsweise bifunktionellen Polyols zugegeben und abreagiert. Wenn das Gemisch weitgehend isocyanatfrei ist, kann das Produkt abgefüllt oder mit beliebigen Polyolen gemischt werden.

Herstellung von Harnstoffgruppen enthaltenden Polyisocyanaten

Ein Mol eines unsymmetrischen, vorzugsweise bifunktionellen Polyisocyanats wird mit 0,2 bis 0,7 Mol, vorzugsweise 0,25 bis 0,6 Mol eines vorzugsweise bifunktionellen Polyols gemischt und bei Temperaturen von 20 bis 110, vorzugsweise 50 bis 95 °C in Gegenwart von 0,1 bis 0,7, vorzugsweise 0,2 bis 0,4 Mol Wasser umgesetzt.

In einer besonders bevorzugten Ausführungsform wird vor der Wasserzugabe aus dem Polyisocyanat und dem Polyol ein Isocyanatgruppen enthaltendes Prepolymer hergestellt. Erst nach Erreichen eines konstanten Isocyanatgehaltes wird das Wasser zugesetzt und umgesetzt. Die so erhaltenen Harnstoffgruppen enthaltenden Isocyanatprepolymere zeichnen sich durch einen stark erniedrigten Gehalt an monomeren Polyisocyanaten aus und stellen deshalb besonders wertvolle Bausteine für die Herstellung von Klebstoffen dar.

Alle Isocyanatgruppen enthaltenden Prepolymere können nach der Reaktion mit Wasser selbstverständlich mit beliebigen weiteren Polyisocyanaten gemischt werden.

Sie können als solche als feuchtigkeitshärtende Einkomponentenklebstoffe oder als Polyisocyanate für Zweikomponentenklebstoffe eingesetzt werden.

Bausteine für die erfindungsgemäß aufzubauenden Harnstoffgruppen enthaltenden Polyole und/oder Polyisocyanate sind unsymmetrisch substituierte Polyisocyanate, wie beispielsweise Alkylbenzoldiisocyanate, bei denen eine Isocyanatgruppe orthoständig zur Alkylgruppe ist, vorzugsweise 2,4-Toluylendiisocyanat, Diphenylmethandiisocyanate mit einem Gehalt von mindestens 40 % des 2,4'-Isomeren, Diphenylmethandiisocyanate mit einer zu einer Isocyanatgruppe orthoständigen Alkylgruppe (z.B. DE-A-29 35 318), Polyisocyanate mit einer aromatisch und aliphatisch gebundenen Isocyanatgruppe (vgl. DE-A 34 02 623, 32 45 320, 32 45 321) oder 1-Isocyanato-methyl-3-isocyanato-1,5,5-trimethylcyclohexan (IPDI). Ganz besonders bevorzugte Diisocyanate sind 2,4-Toluylendiisocyanat und IPDI.

Neben den Polyisocyanaten werden vorzugsweise bifunktionelle Polyester, Polyether und/oder Polyetherester mit einem Molekulargewicht von 500 bis 6000, vorzugsweise 700 bis 3000 eingesetzt, die in bekannter Weise aus aliphatischen und/oder aromatischen Dicarbonsäuren, wie beispielsweise Adipinsäure und/oder ortho-, iso- und/oder Terephthalsäure und Glykolen wie Ethylen-, 1,2-Propylen-, 1,4-Butylen- und/oder 1,6-Hexylenglykol, oder auch Diethylenglykol, Neopentylglykol und/oder 1,4-Cyclohexandimethanol durch Schmelzkondensation erhalten werden. Ebenfalls zu erwähnen sind hier Hydroxylpolyester der Kohlensäure und/oder 5-Hydroxycapronsäure.

Die Hydroxylpolyetherpolyole werden in bekannter Weise durch Anlagerung von Ethylen- und/oder Propylenoxid an vorwiegend bifunktionelle Starter wie beispielsweise Wasser, Ethylenglykol, Propylenglykol oder Bisphenol A erhalten.

Polytetramethylenetherglykole sind ebenfalls einsetzbar. Auch bei den Polyetherpolyolen sind die Molekulargewichte in weiten Grenzen variierbar, bevorzugt wird ein Bereich von 600 bis 3000. Polyetherester wie sie durch Reaktion der obengenannten Verbindungen aus der Klasse der Dicarbonsäuren, Glykole und Polyetherglykole erhalten werden (vgl. DOS 34 37 915) sind ebenfalls einsetzbar.

Wenn besonders niedrige Viskositäten gewünscht werden, sind Polyetherpolyole und Polyetheresterpolyole besonders bevorzugt. Da die Harnstoffgruppen enthaltenden Polyole bzw. Polyisocyanate anschließend mit beliebigen Polyolen bzw. Polyisocyanaten gemischt und kombiniert werden können, ist selbstverständlich die Liste der Polyole durch höherfunktionelle Hydroxylpolyester, -polyether und -polyetherpolyester zu ergänzen, die sich in bekannter Weise durch Mitverwendung von beispielsweise Trimethylolpropan oder Glycerin erhalten lassen. Ebenfalls möglich ist auch die Zugabe von monomeren Glykolen und/oder Triolen wie beispielsweise Diethylenglykol oder Triisopropanolamin oder auch Fettsäureabkömmlingen, wie beispielsweise Rizinusöl.

Für besondere Effekte können anteilig selbstverständlich auch Diole mit Ionen und/oder ionengruppenbildenden Bausteinen, wie beispielsweise Dimethylolpropionsäure, N-Methyldiethanolamin und/oder Umsetzungsprodukte von Natriumbisulfit und propoxyliertem Butendiol-1,4 mitverwendet werden.

Die Liste der Polyisocyanate ist insbesondere um Hexamethylendiisocyanat mit seinen Biureten und Trimerisaten, 4,4'-Diphenylmethandiisocyanat und dessen Hydrierungsprodukte und ferner um Polyisocyanate, die sich durch Trimerisierung und/oder Urethanisierung mit beispielsweise Trimethylolpropan vom Toluylendiisocyanat oder IPDI ableiten, zu ergänzen, um nur einige bevorzugte Kandidaten zu erwähnen.

Die genannten Systeme sind bevorzugt lösungsmittelfrei einzusetzen, können aber auch mit Lösungsmitteln wie beispielsweise Ethylacetat, Aceton oder Methylethylketon verdünnt werden. Die einkomponentig verarbeitbaren Systeme können als solche eingesetzt werden, wobei normalerweise die Feuchtigkeit der Folien zum Abbinden ausreicht; denkbar ist aber auch nach Aufbringen des Klebstoffs eine zusätzliche Benebelung mit Feuchtigkeit und/oder Katalysatoren, um eine raschere Aushärtung zu gewährleisten. Die Applikation mit Solvens ist möglich.

Die zweikomponentig zu verarbeitenden Systeme werden bevorzugt in einem solchen Verhältnis gemischt, daß das Verhältnis der Isocyanatgruppen der Polyisocyanatkomponente zu Hydroxylgruppen der Polyolkomponente zwischen 1,05 zu 1 und 3,0 zu 1, vorzugsweise 1,1 zu 1 und 2,0 zu 1 eingestellt ist. Dieses Verhältnis ist für optimale Eigenschaftem vom Typ der herzustellenden Verbunde und von der Luftfeuchtigkeit und der Temperatur abhängig.

Die Mischung der Polyol- und Polyisocyanatkomponente ist nur begrenzt lagerfähig. Ein durch inniges Vermischen der Reaktionspartner hergestellte Mischung ist in der Regel bei 20 °C und 50 % Luftfeuchtigkeit 0,25 bis 12 Stunden verarbeitungsfähig, je nach Auswahl der Reaktionspartner und der stöchiometrischen Mischungsverhältnisse. Bevorzugt ist kontinuierliches, maschinell geregeltes Mischen der beiden Reaktionspartner kurz vor dem Zeitpunkt der Applikation auf die Folie. Je nach Viskosität der Reaktionspartner erfolgt das Mischen bei erhöhter Temperatur, um gut zu verarbeitende Viskositäten zu erhalten. Möglich sind Verarbeitungstemperaturen bis 100 °C, bevorzugt bis 80 °C, besonders bevorzugt von 20 bis 50 °C.

Die lösungsmittelfreie Applikation der Klebstoffmischung erfolgt durch eine Kombination von Auftrags-, Kaschier- und Wickelsystemen, wie z.B. eine "VARICOATER LF"-Anlage der Fa. Windmöller und Hölscher, Lengerich oder eine "POLYTEST 440" LF-Kaschieranlage der Fa. Polytype in Freiburg, Schweiz. Es ist ebenfalls möglich, die erfindungsgemäßen Klebstoffe als Einkomponentensysteme einzusetzen.

Zu weiteren Einzelheiten der Herstellung von Verbundfolien vgl. auch DE-A 25 49 227 oder H. Hinsken in Kunststoffe 77, 461 (1987). Als Auftragsmenge werden, abhängig vom Auftragsverfahren, Folientyp und Bedingungen, wie z.B. Druckfarben, ca. 0,8 bis 8,0, bevorzugt 1,0 bis 4,0 g/m$^2$ Klebstoff aufgetragen.

Bei Einkomponentenklebstoffen können evtl. auch bis zu 20 g/m$^2$ Klebstoff aufgetragen werden.

Als klebtechnische Hilfs- und/oder Zusatzstoffe kann die Mischung z.B. Reaktionsbeschleuniger, wie beispielsweise Zinn-IV-Verbindungen oder tertiäre Amine, Füllstoffe, Weichmacher oder Gleitmittel und Pigmente enthalten.

Möglich ist auch der Zusatz von dem Fachmann bekannten Stabilisatoren, Lichtschutzmitteln und Feuchtigkeitsadsorbentien. Zur Verbesserung bestimmter Klebeigenschaften können dem Klebstoff auch Haftvermittler, wie z.B. Silane zugesetzt werden.

Ganz besonders bevorzugte Ausgangsverbindungen sind:

Polyole

P-1
Polypropylenetherglykol vom Molekulargewicht 1000
Hydroxylzahl 112

P-2
Polypropylenetherglykol vom Molekulargewicht 2000
Hydroxylzahl 56

P-3
Polypropylenethertriol vom Molekulargewicht 450

Hydroxylzahl 375
P-4
Polyethylenethertriol vom Molekulargewicht 300
Hydroxylzahl 560
P-5
Hydroxypolyester aus Adipinsäure und Neopentylglykol vom Molekulargewicht 1000
Hydroxylzahl 110, Säurezahl 0,7
P-6
Hydroxylpolyester vom Molekulargewicht 1400 aus 1 Mol P-1, 2 Mol Diethylenglykol, 1,2 Mol ortho-Phthalsäure und 0,8 Mol Isophthalsäure
Hydroxylzahl 80, Säurezahl 0,6
P-7
Hydroxylpolyester vom Molekulargewicht 1400 aus 1 Mol P-1, 2 Mol Ethylenglykol und 2 Mol ortho-Phthalsäure
Hydroxylzahl 80, Säurezahl 0,8
P-8
Umsetzungsprodukt von 1 Mol P-6 mit 0,3 Mol I-1
Hydroxylzahl 50

Polyisocyanate

I-1
2,4-Toluylendiisocyanat
I-2
Diphenylmethandiisocyanat mit mehr als 96 % des 4,4'-Isomeren
I-3
1-Isocyanatomethyl-3-isocyanato-1,5,5-trimethylcyclohexan (IPDI)
1-4
Hexamethylendiisocyanat
I-5
Umsetzungsprodukt von Trimethylolpropan mit 3 Mol I-1
NCO-Gehalt: 17,2 %
I-6
Umsetzungsprodukt von 1 Mol Polyol P-6 mit 2,75 Mol Polyisocyanat I-2
NCO-Gehalt: 9,9 %
I-7
Trimerisat von I-1
NCO-Gehalt von 22,5 %
I-8
Trimerisat von I-4
NCO-Gehalt: 23,1 %
I-9
4-Isocyanatophenyl-4-methyl-3-isocyanatocyclohexylmethan
I-10
4,4'-Diisocyanatodicyclohexylmethan
I-11
4-Methyl-3,4'-diisocyanatodiphenylmethan
I-12
Umsetzungsprodukt von 1 Mol P-6 mit 4 Mol Polyisocyanat I-1, anschließend das monomere I-1 über einen Fallfilmverdampfer abdestilliert.
NCO-Gehalt: 5,2 %; <0,03 % freies TDI

Herstellung der harnstoffgruppenhaltigen Polyole

Zu 1 Mol Polyisocyanat (X) werden y1 Mol Polyol (Y1) und z Mol Wasser (Z) bei einer Temperatur von 90 °C gegeben. Wenn die berechnete Menge Kohlendioxid entwickelt wurde, wurden y2 Mol Polyol (Y2) zugegeben und durch Steigern der Temperatur das Polyol isocyanatfrei gestellt. Durch Anlegen von Vakuum wurde entgast.

| | X | | Y1 | Z | Y2 | OHZ | Viskosität $\eta 50^0 C$ (mPas) | Harnstoff (Gew.-%) |
|---|---|---|---|---|---|---|---|---|
| | (Mol) | | (Mol) | (Mol) | (Mol) | | | |
| PoI-1 | 1 | I-1 | 0,5 P-1 | 0,2 | 1,0 P-1 | 50,6 | 3000 | 0,7 |
| Pol-2 | 1 | I-1 | 0,3 P-1 | 0,4 | 1,0 P-1 | 56,0 | 9600 | 1,6 |
| Pol-3 | 1 | I-3 | 0,5 P-1 | 0,2 | 1,0 P-1 | 52,3 | 1500 | 0,7 |
| Pol-4 | 1 | I-3 | 0,3 P-1 | 0,4 | 1,0 P-1 | 58,1 | 3000 | 1,6 |
| Pol-5 | 1 | I-1 | 0,5 P-6 | 0,2 | 1,0 P-6 | 34,5 | 16000 | 0,5 |
| Pol-6 | 1 | I-1 | 0,3 P-6 | 0,4 | 1,0 P-6 | 43,7 | 15000 | 1,2 |
| Pol-7 | 1 | I-3 | 0,5 P-6 | 0,2 | 1,0 P-6 | 36,9 | 9000 | 0,5 |
| Pol-8 | 1 | I-3 | 0,3 P-6 | 0,4 | 1,0 P-6 | 39,5 | 12000 | 1,1 |
| Pol-9 | 1 | I-3 | 0,15 P-6 | 0,4 | 1,15 P-6 | 44,8 | 10000 | 1,1 |
| Pol-10 | 1 | I-9 | 0,5 P-6 | 0,2 | 1,0 P-6 | 36,6 | 26000 | 0,5 |
| Pol-11 | 1 | I-10 | 0,3 P-6 | 0,4 | 1,0 P-6 | 42,4 | 27000 | 1,2 |
| Pol-12 | 1 | I-11 | 0,3 P-6 | 0,4 | 1,0 P-6 | 39,6 | 40000 | 1,2 |
| Pol-13 | 1 | I-1 | 0,3 P-6 | 0,4 | 1,0 P-1 | 58,9 | 20000 | 1,5 |
| Pol-14 | 1 | I-3 | 0,04 P-6 | 0,5 | 0,9 P-6 | 36,6 | 38000 | 2,0 |
| Pol-15 | 1 | I-1 | 0,05 P-7 | 0,4 | 1,25 P-7 | 42,1 | 8000 | 1,2 |
| Pol-16 | 1 | I-3 | 0,04 P-6 | 0,5 | 0,96 P-1 | 50,9 | 9000 | 2,3 |
| Pol-17 | 1 | I-1 | 0,05 P-6 | 0,4 | 0,48 P-1 | 32,0 | 5000 | 1,3 |
| | | | | | 0,48 P-2 | | | |

<u>Herstellung der harnstoffhaltigen isocyanathaltigen Prepolymere (besonders bevorzugte Ausführungsform)</u>

Zu einem Mol Polyol (X) werden bei 60 bis 90 °C y Mol Polyisocyanat (Y) gegeben und die Reaktion bis zum Erreichen eines konstanten NCO-Wertes gefahren. Anschließend werden z Mol Wasser (Z)

zugegeben und der Reaktionsfortgang mit einer Gasuhr kontrolliert. Anschließend wird vor dem Abfüllen im Vakuum entgast.

| | X | | Y | | Z | %NCO | Viskosität 70° C (mPas) | Harnstoff (Gew.-%) |
|---|---|---|---|---|---|---|---|---|
| | (Mol) | | (Mol) | | (Mol) | | | |
| Iso-1 | 1 | P-6 | 2,5 | I-1 | 0,4 | 4,74 | 22000 | 1,2 |
| Iso-2 | 1 | P-6 | 2,5 | I-1 | 0,48 | 3,98 | 34000 | 1,57 |
| Iso-3 | 0,5 | P-1 | 2,5 | I-1 | 0,45 | 4,38 | 44000 | 1,35 |
| | 0,5 | P-2 | | | | | (bei 21° C) | |
| Iso-4 | 1 | P-5 | 2,5 | I-1 | 0,33 | 6,36 | 12000 | 1,34 |
| Iso-5 | 1 | P-1 | 1,9 | I-1 | 0,15 | 4,35 | 6000 | 0,65 |
| | | | | | | | (bei 50° C) | |
| Iso-6 | 1 | P-6 | 2,5 | I-11 | 0,48 | 3,80 | 42000 | 1,37 |

Die Viskosität wurde bei den angegebenen Temperaturen mit dem Hoake Viskotester VT 180 Drehkörper (E30, E100, E1000) bestimmt

Beispiele

Herstellung der Klebstoffe

Die Polyolkomponenten werden, wenn notwendig intensiv gemischt (die Mischungen sind beliebig lagerfähig) und mit der Polyisocyanatkomponente, die, sofern es sich um eine Abmischung handelt ,auch in Mischung lagerfähig ist, bei 40 °C gemischt und sofort verarbeitet. Unter der Kennzahl (KZ) ist das Verhältnis der Isocyanatgruppen zu Hydroxylgruppen angegeben.

| | Polyolkomponente (g) | Polyisocyanatkomponente (g) | KZ |
|---|---|---|---|
| M-1 | 47,3 Pol-5 + 4,7 P-4 | 100 I-12 | 1,5 |
| M-2 | 45,1 Pol-6 + 4,5 P-4 | 100 I-12 | 1,5 |
| M-3 | 42,1 P-8 + 4,2 P-4 | 100 I-12 | 1,5 |
| M-4 | 100 P-3 | 844 Iso-2 | 1,2 |
| M-5 | 100 P-3 | 654 I-12 | 1,2 |
| M-6 | 100 P-3 | 596 Iso-2 + 99 I-6 | 1,2 |
| M-7 | 28,2 P-8 + 2,8 P-4 | 100 Iso-2 | 1,75 |
| M-8 | 30,0 Pol-6 + 3 P-4 | 100 Iso-2 | 1,75 |
| M-9 | - | Iso-2 | |
| M-10 | - | I-12 | |

Die Mischungen M-3, M-5 und M-10 sind nicht erfindungsgemäß; M9 und M10 sind 1-K-Systeme, die übrigen sind 2-K-Systeme.

Auswahl der in den Beispielen genannten Folien und Folienverbunde, Erklärung der Abkürzungen:

Alu: Aluminiumfolie, 40 µ, glänzende Seite wird kaschiert
PA: Polyamidfolie, ungereckt, 50 µ
PE: Polyethylen, 50 µ, gleitmittelhaltig, coronarisiert
HD: sterilisationsfestes Polyethylen, 70 µ, coronarisiert
PETP: Polyesterfolie, 75 µ
PA/PE = Verbung 1
Alu/HD = Verbund 3
PA/HD = Verbund 4
Alu/PETP = Verbund 5

Auftragsmenge 2 bis 3 g Klebstoff pro $m^2$.

Die Auswahl der Prüfmuster erfolgt aus mindestens 20 m langen, um eine Hülse gewickelten Laminaten von 30 bis 100 cm Bahnbreite. Die Prüfmuster werden nach Abwickeln von 5 Wickellagen aus der Mitte der Verbundfolienbahn ausgeschnitten.

Die Verbundfestigkeitsprüfungen erfolgen jeweils 24 Stunden, 48 Stunden und 1 Woche nach der Herstellung der Folien. Vom Zeitpunkt der Herstellung werden die Folien in einem klimatisierten Raum bei 23 °C und 50 % Luftfeuchte gelagert. Zusätzlich werden die Verbunde 3 und 4 nach einer Woche Lagerung der Sterilisationsprüfung im Webeco-Gegendruck-Autoklav bei 121 °C über 30 Minuten unterworfen.

Prüfungsdurchführung:

Je 15 mm breite Streifen der Laminate werden mit der Schlagschere auf 30 cm Länge kantenparallel geschnitten. Die Verbundprüfung erfolgt im T-Schälversuch mit der VNGG-Prüfmaschine der Fa. Brugger GmbH, 8000 München in Anlehnung an DIN 53 530 Abs. 7 bei 100 mm/min Abzugsgeschwindigkeit und mindestens 100 mm Prüflänge.

Die Auswertung der mittleren Trennkraft erfolgt nach DIN 53 289 Abs. 9.

Die Angaben erfolgen in Newton/15 mm, Alle Ergebnisse sind Mittelwerte aus Doppelbestimmungen.

| | Verbund 1<br>24 h/48 h/7d | Verbund 3<br>24 h/48 h/7d/Ster. | Verbund 4<br>24 h/48 h/7d/Ster. | Verbund 5<br>24 h/48 h/7d |
|---|---|---|---|---|
| M-1 | 1,9/9,0/14,8A | 0,8/4,4/8,9/5,2 | 1,2/8,1/18,6A/12,1 | 0,8/5,0/9,8 |
| M-2 | 0,7/4,9/12,8 | /6,7 | /9,6 | 0,3/3,3/8,4 |
| M-3 | 0,2/1,9/10,0 | /4,2 | /7,5 | 0,2/0,6/7,7 |
| M-4 | 1,9/9,0/14,8A | 0,8/4,4/8,9/5,2 | /12,1A | |
| M-5 | 1,4/6,0/8,4 | 0,2/0,6/0,5/0,2 | /6,0 | |
| M-6 | 2,4/ - /5,1 | 1,0/4,8/9,5/3,5 | 1,6/6,1/13,6A/7,0 | 1,2/5,9/9,4 |
| M-7 | 1,9/4,4/9,7A | 0,3/3,7/3,8/9,0 | 0,4/2,8/12,5A/7,0 | |
| M-8 | 0,5/2,3/9,9A | 0,2/1,7/3,0/2,4 | 0,2/1,8/ 9,0 /7,1 | |
| M-9 | | 0,2/0,6/7,4 | 0,2/0,8/8,4A | |
| M-10 | | 0,2/0,2/3,1 | 0,2/0,4/4,2 | |

Die Beispiele M-3, M-5 und M-10 sind nicht erfindungsgemäß.

Ster.: Festigkeit nach Sterilisation bei 121$^{o}$C/30 Minuten
A: Folienabriß

Die Tabellen zeigen folgende Verbesserungen gegenüber den Vergleichsmateralien M-3, M-5 und M-10

Mischung 1-3

Die Harnstoffgruppen enthaltendene Mischungen 1 und 2 zeichnen sich durch eine stark erhöhte Anfangsfestigkeit (1- und 2-Tagewerte) bei vergleichsbarer Endfestigkeit aus.

Mischung 4 und 5

Stark verbesserte Adhäsionfertigkeit an Aluminium/Kunststoff-verbunden (Verbund 3).

Mischung 6 bis 8

Zeigt das generell hohe Festigkeitsniveau mit den erfindungsgemäßen Klebstoffen.

Mischung 9 und 10

Zeigt die besseren Fertigkeiten der harnstoff-haltigen Systeme.

## Patentansprüche

**1.** Verwendung von transparenten, Isocyanatgruppen enthaltenden Klebstoffen auf Basis wenigstens eines Polyols und wenigstens eines Isocyanates zur Herstellung von Verbundfolien, dadurch gekennzeichnet, daß der Klebstoff Harnstoffgruppierungen der Formel

X-R-NH-CO-NH-R'-Y

aufweist, wobei

X, Y gleich oder verschieden sind und für eine Isocyanat- und/oder Urethangruppe stehen,

R, R' gleich oder verschieden sind und Reste eines wenigstens zwei NCO-Gruppen unterschiedlicher Reaktivität aufweisenden Isocyanates nach Entfernen der zwei NCO-Gruppen darstellen und wobei der Klebstoff 0,15 bis 4 Gew.-% -NH-CO-NH-Gruppen, bezogen auf den Klebstoff, enthält und darüber hinaus der Klebstoff in einer Menge von 0,8 bis 20 $g/m^2$ auf die zu verklebenden Folien aufgetragen wird.

**2.** Verwendung nach Anspruch 1, dadurch gekennzeichnet, daß das Polyol ein Polyester, Polyether oder Polyetherester ist.

**3.** Verwendung nach wenigstens einem der vorhergehenden Ansprüche, dadurch gekennzeichnet, daß der Klebstoff 0,3 bis 3,0 Gew.-% -NH-CO-NH-Gruppen bezogen auf den Klebstoff enthält.

**4.** Verwendung nach wenigstens einem der vorhergehenden Ansprüche, dadurch gekennzeichnet, daß R und R' einen Aryl-, Alkyl-, Cycloalkyl- oder Aralkylrest bedeuten, die substituiert oder unsubstituiert sein können.

## Claims

**1.** The use of transparent adhesives containing isocyanate groups and based on at least one polyol and at least one isocyanate for the production of composite foils or films, characterized in that the adhesive comprises urea groupings of formula

X-R-NH-CO-NH-R'-Y

where

X and Y are the same or different and represent an isocyanate and/or urethane group,

R and R' are the same or different and represent radicals of an isocyanate which contains at least two NCO groups of different reactivities after removing the two NCO groups, and wherein the adhesive contains 0.15 to 4 weight %, based on the adhesive, of -NH-CO-NH- groups, and in addition the adhesive is applied in an amount of 0.8 to 20 $g/m^2$ to the foil or film to be adhesively bonded together.

2. A use according to claim 1, characterized in that the polyol is a polyester, polyether or polyether ester.

3. A use according to at least one of the preceding claims, characterized in that the adhesive contains 0.3 to 3.0 weight %, based on the adhesive, of-NH-CO-NH-groups.

4. A use according to at least one of the preceding claims, characterized in that R and R' represent an aryl, alkyl, cycloalkyl or aralkyl radical, which may be substituted or unsubstituted.

**Revendications**

1. Utilisation d'adhésifs transparents, contenant des groupes isocyanates, à base d'au moins un polyol et d'au moins un isocyanate pour produire des feuilles composées ou multicouche, utilisation caractérisée en ce que l'adhésif contient des groupements urée de formule

X-R-NH-CO-NH-R'-Y

dans laquelle les symboles

X et Y sont identiques ou différents et représentent chacun un groupe isocyanate et/ou uréthane;

R et R' sont identiques ou différents et représentent les restes d'un isocyanate comportant au moins deux groupes NCO de réactivité différente, après enlèvement des deux groupes NCO, et l'adhésif contenant 0,15 à 4 % en poids de groupe -NH-CO-NH, par rapport à l'adhésif, et en outre l'adhésif étant appliqué en une quantité de 0,8 à 20 g/$m^2$ sur les feuilles à coller.

2. Utilisation selon la revendication 1, caractérisée en ce que le polyol est un polyester, un polyéther ou un polyétherester.

3. Utilisation selon l'une au moins des revendications précédentes, caractérisée en ce que l'adhésif contient 0,3 à 3,0 % en poids de groupe -NH-CO-NH par rapport à l'adhésif.

4. Utilisation selon l'une au moins des revendications précédentes, caractérisée en ce que les symboles R et R' représentent chacun un reste aryle, alkyle, cycloalkyle ou aralkyle, qui peuvent être substitués ou non substitués.